Europäisches Patentamt

European Patent Office

Office européen des brevets

(19)

(11) Veröffentlichungsnummer: **0 278 083 B1**

# EUROPÄISCHE PATENTSCHRIFT

(12)

(45) Veröffentlichungstag der Patentschrift: **16.10.91**

(51) Int. Cl.⁵: **B23B 27/14**

(21) Anmeldenummer: **87118229.1**

(22) Anmeldetag: **09.12.87**

(54) Schneidwerkzeug für die spanabhebende Metallbearbeitung.

(30) Priorität: **09.01.87 DE 8700393 U**

(43) Veröffentlichungstag der Anmeldung:
**17.08.88 Patentblatt 88/33**

(45) Bekanntmachung des Hinweises auf die
Patenterteilung:
**16.10.91 Patentblatt 91/42**

(84) Benannte Vertragsstaaten:
**AT BE CH DE ES FR GB IT LI LU NL SE**

(56) Entgegenhaltungen:
EP-A- 0 066 091    EP-A- 0 143 758
DE-A- 2 231 631    DE-A- 3 522 542
GB-A- 2 004 477    JP-U-52 098 885

SOVIET ENGINEERING RESEARCH, Band 4,
Nr. 1, Januar 1984; Seiten 67,68; MELTON,
MOWBRAY, GB; S.V. APRAKSIN: "Throwaway
multi-facet tips with a new rake face form"

PATENT ABSTRACTS OF JAPAN, Band 4, Nr.
76 (M-14)[558], 3. Juni 1980; & JP-A-55 37 205
(TOSHIBA TUNGALOY K.K.) 15-03-1980

TOOLING & PRODUCTION, Band 45, Nr. 12,
März 1980, Seite 140, Solon, Ohio, US;
"Sumitomo's revolutionary new carbide inserts"

(73) Patentinhaber: **Nederlandse Hardmetaal Fabrieken B.V.**
**Nieuwe Havenweg 29**
**NL-6827 BA Arnhem(NL)**

(72) Erfinder: **van Barneveld, Marinus**
**M. de Ruyterstraat 40**
**NL-6904 AV Zevenaar(NL)**

(74) Vertreter: **Tergau, Enno et al**
**Patentanwälte Tergau & Pohl Postfach 11 93**
**47 Hefnersplatz 3**
**W-8500 Nürnberg 11(DE)**

## Beschreibung

Die Erfindung betrifft ein Schneidwerkzeug für die spanabhebende Metallberarbeitung mit den im Oberbegriff des Anspruchs 1 aufgeführten Merkmalen.

Bei einem aus **GB 2 004 477 A** vorbekannten Werkzeug der eingangs genannten Art sind in den Eckbereichen der Spanfläche mehrere kleine, im wesentlichen halbkugelförmige Spanbrecher vorhanden. In den Spanflächenbereichen zwischen den Schneidenecken ist lediglich ein länglicher großer Spanbrecher vorhanden.

Diese unterschiedlichen Spanbrecher wirken in Abhängigkeit von der Schnittiefe unterschiedlich. Bei geringen Schnittiefen wirken ausschließlich die halbkugelförmigen Spanbrecher in den Eckbereichen. Bei größeren Schnittiefen wirken zusätzlich die länglichen Spanbrecher in der Spanflächenbereichen. Eine derartige Ausgestaltung ist insbesondere bei den zum Schruppen benötigten hohen Schnittiefen nachteilig, da große Kontaktflächen zwischen dem abfließenden Span und dem Werkzeug entstehen. Einerseits führt dies zur Entstehung einer nachteiligen Oberflächenreibung zwischen Span und Werkzeug, andererseits wird ein hoher Anteil der im Span enthaltenen Wärme über das Werkzeug abgeführt. Dies wirkt sich insbesondere deshalb auf die erwünschte Bruchanfälligkeit des Spanes nachteilig aus, weil die zur temperaturbedingten Eigenhärtung des Spanes benötigte Wärme so über das Schneidwerkzeug entweicht.

Der Erfindung liegt die Aufgabe zugrunde, ein Schneidwerkzeug der eingangs genannten Art so auszugestalten, daß auch bei stark differierenden Vorschüben bzw. Spandicken sowie Schnittgeschwindigkeiten ein ausgeglichen gutes Spanbildungsverhalten gewährleistet ist. Diese Aufgabe wird durch die Kennzeichnungsmerkmale des Anspruches 1 gelöst. Durch die in Spanablaufrichtung zueinander parallelen, nach oben vorstehenden Spanrippen liegt der ablaufende Span nur partiell auf der Spanfläche auf. Dadurch erfolgt eine starke Spanerhitzung und somit Härtung des Spanwerkstoffes. Der Werkstoff wird damit bruchanfälliger und somit für eine anschließende Spanbrechung optimal vorbereitet. Die eigentliche Spanbrechung erfolgt durch die Rampenerhebungen, die mit den Spanrippen auf Lücke stehen. Beim Ablauf über die Spanrippen erfährt der Span im Bereich der zwischen den Rippen befindlichen Spanflächenbereiche bereits eine gewisse Verformung in Richtung auf den Nutgrund. Rechtwinklig zur Spanablaufrichtung ist der Span also geringfügig in sich gewellt. Diese Well-Verformung wird durch die Rampenerhebungen in entgegengesetzter Richtung beansprucht. Dadurch erfolgt eine Torsion des ablaufenden Spanes um eine in Ablaufrichtung verlaufende Achse. Diese Torsion erhöht den Verformungsgrad und bewirkt mit noch größerer Sicherheit eine Spanbrechung. Der Abstand, den die Spanflächenrippen zur Fase einhalten, bewirkt, daß der Span beim Anschnitt gegen die Vorderkanten der Spanflächenrippen anläuft und dort hochgebogen wird. Bei geringen Vorschüben bzw. Spandicken erfolgt hier bereits ein Spanbrechen. Bei größeren Vorschüben bzw. Spandicken läuft der Span nach dem Anschnitt auf die Oberflächen bzw. auf die Rücken der Spanrippen auf und gerät dadurch auch außer Kontakt mit den Fasen. Dadurch wird bei größeren Vorschüben bzw. Spandicken im Dauerbetrieb die Fase erheblich geschont. Die Kennzeichnungsmerkmale der Ansprüche 2 bis 8 beinhalten Verfeinerungen des Funktionsprinzips nach der Erfindung.

Der Gegenstand der Erfindung wird anhand von in den Figuren dargestellten Ausführungsbeispielen erläutert. Es zeigen:

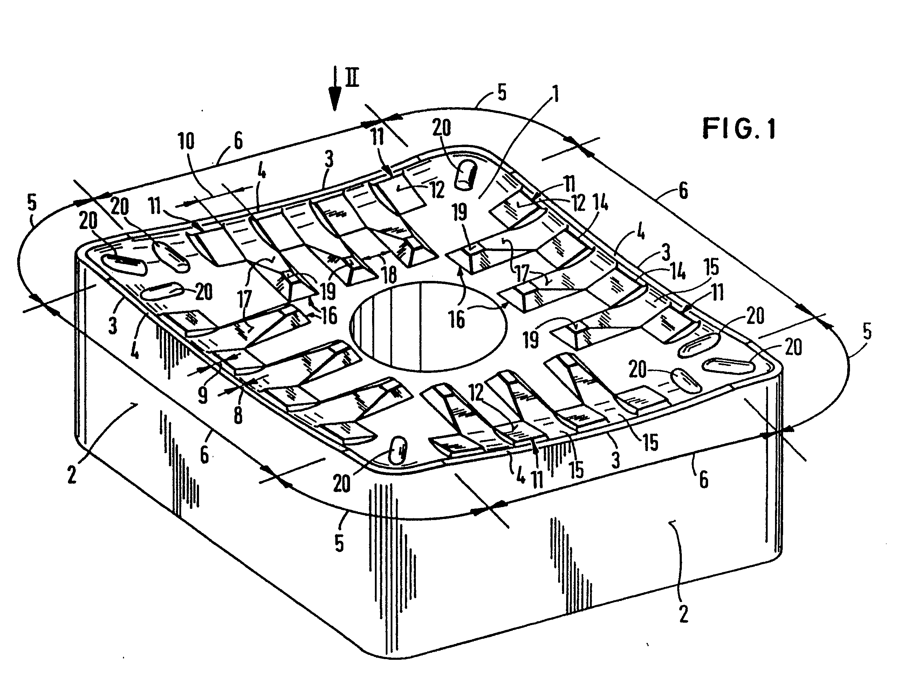

Fig. 1    eine perspektivische Darstellung einer ersten Ausführungsform des Schneidkörpers nach der Erfindung,

Fig. 2    eine Draufsicht auf die Deckfläche des Schneidkörpers gemäß Pfeil II in Fig. 1,

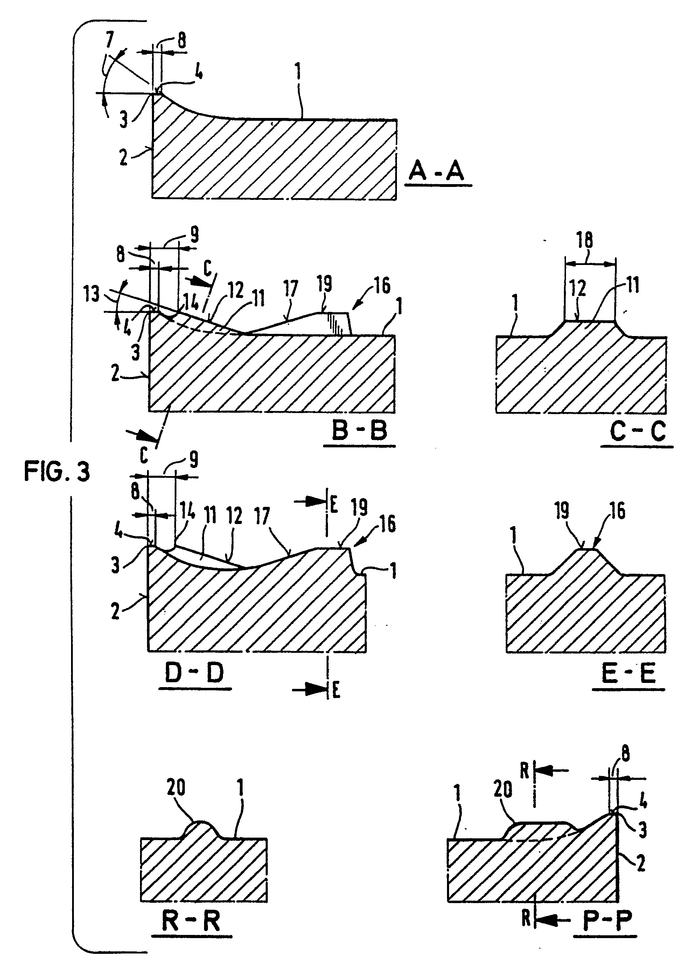

Fig. 3    unterschiedliche Detail-Schnitte A-A, B-B, C-C, D-D, E-E, P-P und R-R in Fig. 2,

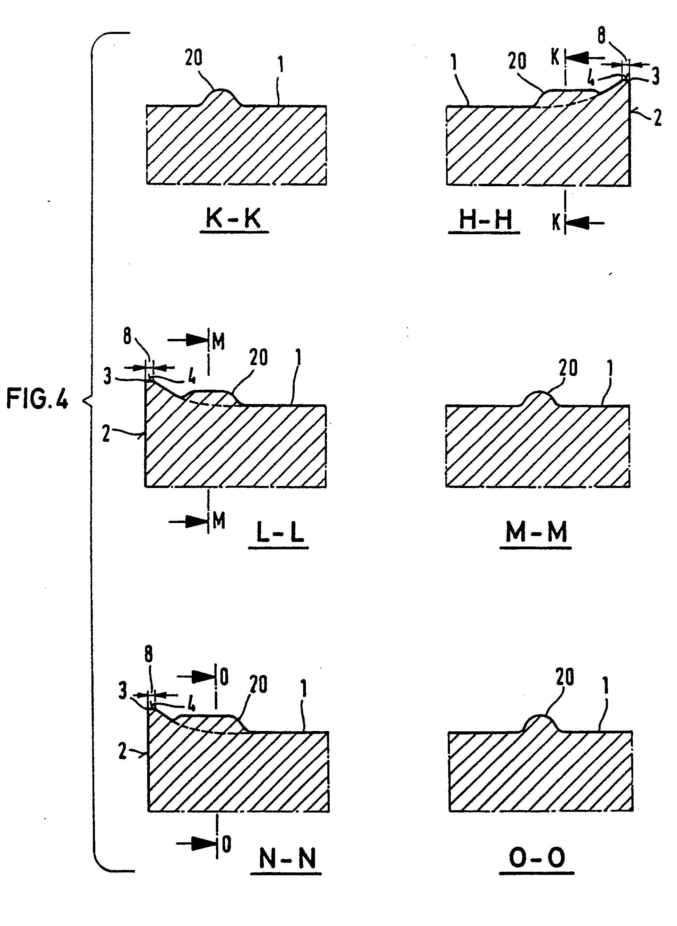

Fig. 4    unterschiedliche Detail-Schnitte H-H, K-K, L-L, M-M, N-N und O-O von Fig. 2,

Der Schneidkörper des erfindungsgemäßen Schneidwerkzeuges besteht aus einem harten Schneidwerkstoff und weist eine rhombische Umrißform auf. Seine Deckfläche bildet die Spanfläche 1 und seine umlaufenden Seitenflächen die Freiflächen 2. Die Spanfläche 1 ist im Schneidkantenbereich mit einer etwa rechtwinklig zur jeweils zugehörigen Freifläche 2 ausgerichteten, parallel zur Schneidkante 3 verlaufenden Fase 4 versehen. In dem sich auf der Spanfläche 1 rechtwinklig zur Schneidkante 3, d.h. in Spanablaufrichtung an die Fase 4 anschließenden Bereich beträgt der Spanwinkel 7 mehr als 30°, vorzugsweise etwa 35°, wobei dieser Spanwinkel 7 mit zunehmendem Abstand von der Fase 4 kleiner wird und in einem mindestens der dreifachen Fasenbreite entsprechenden Abstand von der Fase 4 gegen Null tendiert. Bei einem Ausführungsbeispiel beträgt die Fasenbreite ca. 0,15 mm. In den zwischen den Schneideckenbereichen 5 liegenden Spanflächenbereichen 6 des Schneidkörpers stehen in einem etwa der Fasenbreite 8 entsprechenden Abstand 9 von der Fase 4 beginnend, in Spanablaufrichtung, d.h. rechtwinklig zur Schneidkante 3 verlaufend und mit Seitenabstand 10 nebeneinander angeordnet mehrere Spanrippen 11 aus der Spanfläche 1 vor, deren ebene Oberflächen 12 einen Spanrippenspanwinkel 13 von etwa der Hälfte des Spanwinkels 7 der Spanfläche 1 bilden und deren schneidkantenseitige Vorderkante 14 etwa bis in die Höhe der Fase 4 aus der Spanfläche 1 hinaussteht. Die sich in Spanablaufrichtung an die zwischen den Spanrippen 11 liegenden Spanflächenbereiche 15 anschließenden Spanflächenbereiche sind als Rampenerhebungen 16 mit nach Art von aus der Spanfläche 1 in Spanablaufrichtung bis in etwa das Höhenniveau der Fase 4 aufsteigenden Auflauframpen 17 ausgebildet. Wie die Figuren zeigen, sind die Seitenflanken der Spanrippen 11 und der Rampenerhebungen 16 abgeschrägt. Dies erleichtert auch die Entformung der üblich im Sinterpreßverfahren aus Hartmetall hergestellten Schneidkörper. Der Seitenabstand 10 zwischen den Spanrippen 11 entspricht etwa der Breite 18 der Spanrippen 11 selbst. Die Spanrippenoberfläche 12 weist einen in Spanablaufrichtung geradlinigen Verlauf auf. Sie ist insbesondere eben ausgebildet. Die sich in Spanablaufrichtung an die Auflauframpen 17 anschließenden Oberflächenbereiche 19 der Rampenerhebungen 16 sind zur Fase 4 etwa gleichebig. Die Auflauframpen 17 steigen in Spanablaufrichtung aus demjenigen Bereich der Spanfläche 1 auf, in welchem die Spanfläche 1 etwa rechtwinklig zu den Schneidkörperfreiflächen 2 verläuft.

Die Schneidkanten 3 weisen zwischen den Schneideckenbereichen 5 einen leicht konkaven Verlauf auf. Die Spanflächen 1 der Schneideckenbereiche 5 sind mit mindestens einer gratartigen Erhebung 20 versehen, deren Gratlängsachse 21 etwa rechtwinklig zu der in ihrem Schnittpunkt 22 mit der Schneidkante 3 an die Schneidkante 3 gelegten Tangente verläuft.

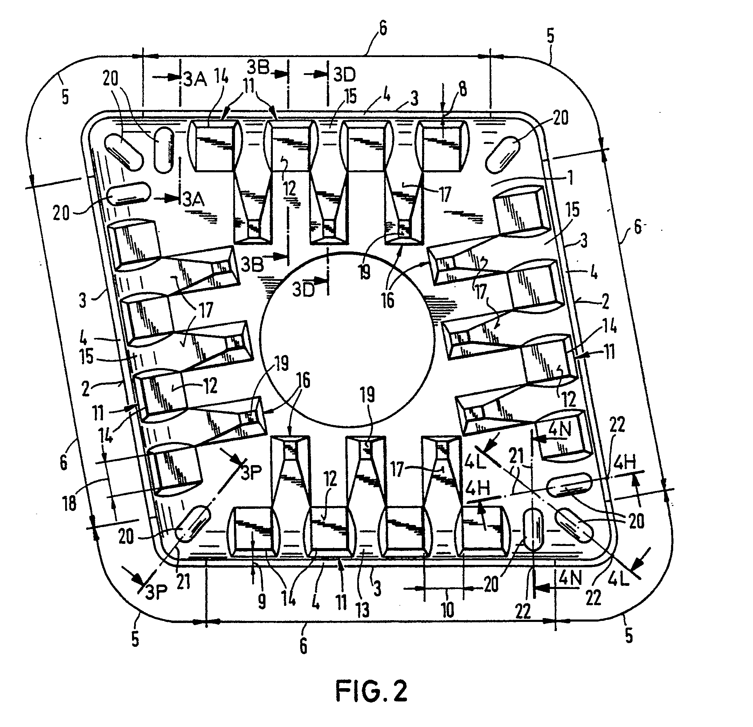

Bei dem rhombusförmigen Schneidkörper gemäß Fig. 2 sind in den spitzwinkligen Schneidekkenbereichen 5 drei Graterhebungen 20 nebeneinander angeordnet, deren beide äußeren, mit ihren Gratlängsachsen 21 parallel zu den Spanrippen 11 verlaufen.

Bezugszeichenliste

| | |
|---|---|
| 1 | Spanfläche |
| 2 | Freiflächen |
| 3 | Schneidkante |
| 4 | Fase |
| 5 | Schneideckenbereich |
| 6 | Spanflächenbereich |
| 7 | Spanwinkel |
| 8 | Fasenbreite |
| 9 | Abstand |
| 10 | Seitenabstand |
| 11 | Spanrippe |
| 12 | Spanrippenoberfläche |
| 13 | Spanrippenspanwinkel |
| 14 | Vorderkante |
| 15 | Spanflächenbereich |
| 16 | Rampenerhebung |
| 17 | Auflauframpe |
| 18 | Spanrippenbreite |
| 19 | Oberflächenbereich |
| 20 | Graterhebung |
| 21 | Gratlängsachse |
| 22 | Schnittpunkt |

## Patentansprüche

1. Schneidwerkzeug für die spanabhebende Metallbearbeitung mit einem Spannschaft und einem daran auswechselbar befestigbaren, quaderförmigen, gegebenenfalls mit rhombischer Oberfläche versehenen Schneidkörper aus einem harten Schneidwerkstoff,
   - dessen mindestens einseitige Deckfläche die Spanfläche (1) und
   - dessen umlaufende Seitenflächen die Freiflächen (2) bilden, wobei die im Schneidkantenbereich mit einer etwa rechtwinklig zur jeweils zugehörigen Freifläche (2) ausgerichteten, parallel zur Schneidkante (3) verlaufenden Fase (4) versehene Spanfläche (1) mit positivem Spanwinkel (7) zwischen den Schneidekkenbereichen (5) spanformende Erhebungen aufweist,

   gekennzeichnet durch folgende Merkmale:
   a) In dem sich auf der Spanfläche (1) rechtwinklig zur Schneidkante (3) an die Fase (4) anschließenden Bereich beträgt der Spanwinkel (7) mehr als 30°, wobei der Spanwinkel (7) mit zunehmendem Abstand von der Fase (4) kleiner wird und in einem mindestens der dreifachen Fasenbreite entsprechenden Abstand von der Fase (4) gegen 0° tendiert.
   b) In einem etwa der Fasenbreite (8) entsprechenden Abstand (9) von der Fase (4) stehen Spanrippen (11) mit in Spanablaufrichtung weisender Längsrichtung aus der Spanfläche (1) vor,
      - deren ebene Spanrippenoberflächen (12) einen positiven Spanwinkel (13) bilden,
         - der kleiner, insbesondere nur etwa halb so groß ist wie der Spanflächenspanwinkel (7) im an die Fase (4) angrenzenden Bereich,
      - und die mit ihrer schneidkantenseitigen Vorderkante (14) etwa bis in die Höhe der Fase (4) aus der Spanfläche (1) hinausstehen.
   c) Die sich in Spanablaufrichtung an die zwischen den Spanrippen (11) liegenden Spanflächenbereiche (15) anschließenden Spanflächenbereiche sind als Rampenerhebungen (16) mit nach Art von aus der Spanfläche (1) in Spanablaufrichtung bis in etwa das Höhenniveau der Fase (4) aufsteigenden Auflauframpen (17) ausgebildet.

2. Schneidwerkzeug nach Anspruch 1,
    dadurch gekennzeichnet,
    daß der Seitenabstand (10) zwischen den Spanrippen (11) etwa der Breite (18) der Spanrippen (11) entspricht.

3. Schneidwerkzeug nach Anspruch 1 oder 2,
    gekennzeichnet durch
    einen in Spanablaufrichtung geradlinigen Verlauf, insbesondere durch eine ebene Ausgestaltung der Spanrippenoberfläche (12).

4. Schneidwerkzeug nach Anspruch 1,
    gekennzeichnet durch
    sich in Spanablaufrichtung an die Auflauframpen (17) anschließende, zur Fase (4) etwa gleichebige Oberflächenbereiche (19) der Rampenerhebungen (16).

5. Schneidwerkzeug nach Anspruch 1 oder 4,
    dadurch gekennzeichnet,
    daß die Auflauframpen (17) in Spanablaufrichtung aus demjenigen Bereich der Spanfläche (1) aufsteigen, in welchem die Spanfläche (1) etwa rechtwinklig zu den Schneidkörperfreiflächen (2) verläuft.

6. Schneidwerkzeug nach einem oder mehreren der vorhergehenden Ansprüche,
    dadurch gekennzeichnet,
    daß die Schneidkanten (3) zwischen den Schneidecken (5) des Schneidkörpers einen leicht konkaven Verlauf aufweisen.

7. Schneidwerkzeug nach einem oder mehreren der vorhergehenden Ansprüche,
    dadurch gekennzeichnet,
    daß die Spanflächen (1) der Schneideckenbereiche (5) mit mindestens einer gratartigen Erhebung (20) versehen sind, deren Gratlängsachse (21) etwa rechtwinklig zu der in ihrem Schnittpunkt (22) mit der Schneidkante (3) an die Schneidkante (3) gelegten Tangente verläuft.

8. Schneidwerkzeug mit rhombusförmiger Deckfläche,
    dadurch gekennzeichnet,
    daß in den spitzwinkligen Schneideckenbereichen (5) drei Graterhebungen (20) nebeneinander angeordnet sind, deren beide äußeren mit ihren Gratlängsachsen (21) parallel zu den ihnen benachbarten Spanrippen (11) verlaufen.

## Claims

1. A cutting tool for chip detaching metal processing with a clamp shaft and a cutter body that can be exchangeably mounted therein, provided if required with a rhombic surface, made of a hard cutting material,
    - whose at least one-sided cover face forms the cutting face (1) and
    - whose surrounding side faces form the flanks (2) wherein the cutting face (1) provided with a land (4) orientated in the cutter edge zone approximately at right angles to the respective flanks (2), extending parallel to the cutting edge (3) and having a positive rake angle (7) has chip forming raised portions between the cutter corner zones (5),
    characterized by the following features :
    a) in the zone adjoining the cutting face (1) at right angles to the land (4) the rake angle (7) amounts to more than $30°$ with the rake angle (7) decreasing as the distance from the land (4) increases and at a distance from the land (4) corresponding to at least three times the land width it tends towards $0°$;
    b) at a distance (9) from the land (4) approximately corresponding to the land width (8), cutter ribs (11) project from the cutting face (1) with their longitudinal direction pointing in the chip flow direction,
    - the planar cutter rib surfaces (12) of said ribs forming a positive rake angle (13),
      - which is smaller, in particular only approximately half as large as the rake angle (7) in the zone adjoining the land (4)
    - and which ribs project from the cutting face (1) with their front edge (14) on the cutting edge side approximately as far as the height of the land (4);
    c) the cutting surface zones which in the chip flow direction join the cutting surface zones (15) lying between the cutter ribs (11), are designed as raised ramp portions (16) with leading type ramps (17) rising from the cutting face (1) in the chip flow direction up to approximately the height level of the land (4).

2. A cutter tool according to claim 1,
    characterized in that

the lateral distance (10) between the cutter ribs (11) approximately corresponds to the width (18) of the cutter ribs (11).

3. A cutter tool according to claim 1 or 2, characterized by
its linearity in the chip flow direction, in particular by a planar form of the cutter rib surface (12).

4. A cutter tool according to claim 1, characterized by
surface zones (19) of the raised ramp portions (16) adjoining the leading ramps (17) in the chip flow direction and being approximately coplanar with the land (4).

5. A cutter tool according to claim 1 or claim 4, characterized in that
in the chip flow direction, the leading ramps (17) rise from that zone of the cutting face (1) wherein the cutting face (1) extends approximately at right angles to the cutter body flanks (2).

6. A cutter tool according to one or more of the preceding claims,
characterized in that
the cutting edges (3) have a slightly concave shape between the cutter corners (5) of the cutter body.

7. A cutter tool according to one or more of the preceding claims,
characterized in that
the cutting faces (1) of the cutter corner zones (5) are provided with at least one ridge type raised portion (20) whose longitudinal ridge axis (21) extends approximately at right angles to the tangent applied to the cutting edge (3) at its intersection (22) with the cutting edge (3).

8. A cutter tool with a rhombic cover face characterized in that
in the acute-angled cutter corner zones (5) there are arranged next to each other three ridge type raised portions (20) whereof the outer ones extend with their longitudinal ridge axes (21) parallel to the cutter ribs (11) adjoining them.

**Revendications**

1. Outil de coupe pour usinage par enlèvement de copeaux, comportant une tige de serrage et un organe de coupe parallélipipédique pouvant être amoviblement fixé sur celle-ci pour être remplacé, cet organe de coupe étant en une matière dure et étant éventuellement muni d'une surface supérieure rhomboïdale, et
- dont la face d'au moins un côté forme la face travaillante (1) et
- dont les surfaces périphériques latérales forment les faces libres (2),
la face travaillante (1) étant munie, dans la région de l'arête de coupe, d'une facette (4) qui suit un tracé parallèle à l'arête de coupe (3) et est dirigée sensiblement perpendiculairement à la face libre conjuguée (2), et présentant des reliefs de formage de copeaux avec un angle de dégagement positif (7), entre les zones des coins de tranchant (5),
caractérisé par les caractéristiques suivantes:
a) dans la région qui, sur la face travaillante (1), succède à la facette (4) perpendiculairement à l'arête de coupe (3), l'angle de dégagement (7) vaut plus de 30°, cet angle de dégagement (7) étant d'autant plus petit que la distance à la facette est plus grande et tendant vers zéro à une distance de la facette correspondant à au moins trois fois la largeur de cette facette.
b) à une distance (9) de la facette correspondant à peu près à la largeur (8) de cette facette, il y a des nervures (11) en saillie sur la face travaillante (1), lesquelles ont leur direction longitudinale orientée dans la direction de sortie des copeaux,
- les surfaces planes supérieures (12) de ces nervures formant un angle de dégagement positif (13),
 - lequel est plus petit que, en particulier seulement la moitié de, l'angle de dégagement (7) dans la région adjacente à la facette (4),
- et ces nervures faisant saillie sur la surface travaillante (1), sensiblement jusqu'à hauteur de la facette (4), par leur arête antérieure (14) située côté arête de coupe.
c) les zones de la face travaillante se raccordant, dans la direction de sortie des copeaux, aux zones de (15) de la face travaillante situées entre les nervures (11) sont aménagées en tant que reliefs-rampes (16) avec des rampes d'arrivée (17) montant, à partir de la face travaillante (1), dans la direction de sortie des copeaux, à peu près jusqu'au niveau de hauteur de la facette (4).

2. Outil de coupe selon revendication 1, caractérisé
par le fait que l'écartement latéral (10) entre les nervures (11) correspond à peu près à la largeur (18) des nervures (11).

3. Outil de coupe selon revendication 1 ou 2, caractérisé
   par un tracé rectiligne dans la direction de sortie des copeaux, notamment par une configuration plane, de la surface supérieure (12) des nervures.

4. Outil de coupe selon revendication 1, caractérisé par des zones de surface supérieure (19) des reliefs-rampes (16) sensiblement de même hauteur que la facette (4), lesquelles, dans la direction de sortie des copeaux, succèdent aux rampes d'arrivée (17).

5. Outil de coupe selon revendication 1 ou 4, caractérisé
   par le fait que les rampes d'arrivée (17) montent, dans la direction de sortie des copeaux, à partir du même domaine de la face travaillante (1) que celui dans lequel ladite face travaillante (1) s'étend à peu près perpendiculairement aux faces libres (2) de l'organe de coupe.

6. Outil de coupe selon une ou plusieurs des revendications précédentes, caractérisé
   par le fait qu'entre les coins de tranchant (5) de l'organe de coupe, les arêtes de coupe (3) présentent un tracé légèrement concave.

7. Outil de coupe selon une ou plusieurs des revendications précédentes, caractérisé
   par le fait que les surfaces travaillantes (1) des zones (5) des coins de tranchant sont munies d'au moins un relief du genre bourrelet (20) dont l'axe longitudinal (21) s'étend sensiblement perpendiculairement à la tangente à l'arête de coupe (3) située à son point d'intersection (22) avec l'arête de coupe (3).

8. Outil de coupe dont la surface vue en plan possède une forme rhomboïdale, caractérisé
   par le fait qu'il y a, agencé l'un à côté de l'autre, dans les régions (5) où les coins de tranchant ont un angle aigu, trois bourrelets (20) dont deux extérieurs ont leurs axes longitudinaux (21) parallèles aux nervures (11) qui leur sont voisines.

FIG.1

FIG.2

EP 0 278 083 B1

FIG. 3

A - A

B - B

C - C

D - D

E - E

R - R

P - P

FIG.4

K-K

H-H

L-L

M-M

N-N

O-O